# EUROPÄISCHE PATENTSCHRIFT

(11) **EP 0 769 110 B1**
(45) Veröffentlichungstag und Bekanntmachung des Hinweises auf die Patenterteilung: **07.10.1998**
(21) Anmeldenummer: 95925819.5
(22) Anmeldetag: 04.07.1995
(51) Int. Cl.: F16H 61/12, F16H 47/04

(54) **ANTRIEBSEINRICHTUNG FÜR EIN KRAFTFAHRZEUG, INSBESONDERE EINE BAUMASCHINE**
DRIVE SYSTEM FOR A MOTOR VEHICLE, IN PARTICULAR FOR A CONSTRUCTION MACHINE
SYSTEME D'ENTRAINEMENT DESTINE A UN VEHICULE A MOTEUR, EN PARTICULIER A UN ENGIN DE TRAVAUX PUBLICS

(30) Priorität: 06.07.1994 DE 4423651
(43) Veröffentlichungstag der Anmeldung: 23.04.1997
(73) Patentinhaber: ZF FRIEDRICHSHAFEN Aktiengesellschaft, 88038 Friedrichshafen (DE)
(72) Erfinder: EYMÜLLER, Helmut, D-88046 Friedrichshafen (DE); HEILIG, Eduard, D-88048 Friedrichshafen (DE); LEGNER, Jürgen, D-88048 Friedrichshafen (DE); MANN, Egon, D-88045 Friedrichshafen (DE)
(74) Vertreter: Zietlow, Karl-Peter
(86) Internationale Anmeldenummer: EP9502581
(87) Internationale Veröffentlichungsnummer: WO9601383

(56) Entgegenhaltungen:
- WO-A-89/08796
- WO-A-90/12227

## Beschreibung

Bei einer Antriebseinrichtung der eingangs genannten Art, wie sie insbesondere bei Baumaschinen, zum Beispiel Radladern, Baggern oder Raupen, eingesetzt wird, treibt ein Antriebsmotor, insbesondere ein Dieselmotor, eine hydrostatische Verstellpumpe. Die Verstellpumpe bildet zusammen mit einem Verstellmotor ein hydrostatisches Getriebe, dessen Übersetzungsverhältnis vorzugsweise durch einen drehzahlabhängigen Steuerdruck verstellt wird (automotive Antriebsregelung). Neben dem hydrostatischen Getriebe zählt zu dieser Antriebseinrichtung ein lastschaltbares Getriebe (häufig ein Zwei-Gang-Planetengetriebe). Mit diesem lastschaltbaren Getriebe kann der nutzbare Übersetzungsbereich der Antriebseinrichtung erhöht werden.

Eine Baumaschine, zum Beispiel ein Radlader, fährt seinen Arbeitszyklus im ersten Gang. Die Fahrgeschwindigkeit wird über die veränderliche Drehzahl des Dieselmotors und mit Hilfe des hydrostatischen Getriebes verändert. Durch das Lastschaltgetriebe ist es möglich, die mechanische Übersetzung auch während der Fahrt und unter Last zu wechseln.

Für Baumaschinen, die schneller als eine vorbestimmte Fahrgeschwindigkeit, zum Beispiel 25 km/h, fahren können, sind in bezug auf die Bremsen verschiedene gesetzliche Auflagen bzw. Vorschriften einzuhalten. Neben der normalen Betriebsbremse muß bei einem Einkreisbremssystem eine Hilfsbetriebsbremse vorhanden sein. Ebenso ist eine Feststell- oder Haltebremse erforderlich. Aus der WO-A-89/08796 ist ein lastschaltbares Zwei-Gang-Planetengetriebe bekanntgeworden, bei dem zwei Reibungskupplungen (eine Kupplung und eine Bremse) unabhängig voneinander betätigbar sind. Die innenliegende Reibungskupplung ist zwischen dem inneren und äußeren Zentralrad des Planetengetriebes wirksam. Somit können beide Zentralräder wahlweise miteinander verspannt werden (Feststell- und/oder Hilfsbremsfunktion). Wenn das Bremsventil betätigt wird, um eine dynamische Notbremsung einzuleiten oder bei einem Ausfall des Steuerdruckes bzw. der Stromversorgung, muß nach den erwähnten gesetzlichen Vorschriften eine bestimmte Verzögerung erreicht werden. Das hierfür erforderliche Bremsmoment ist deutlich geringer als das von den Reibungskupplungen übertragbare maximale Auslegungsmoment. Dieser Umstand führt zu unzulässig hohen Bremsungen bzw. zu einem Blockieren der Antriebsräder. In einem solchen Fall wäre das Fahrzeug für den Fahrer nicht mehr kontrollierbar.

Die WO-A-90/12227 zeigt ein Zweigang-Planetengetriebe mit einem hydrostatischen Wandler gemäß dem Oberbegriff des Anspruch 1.

Der vorliegenden Erfindung liegt die Aufgabe zugrunde, eine Antriebseinrichtung zu schaffen, bei der die Bremswirkung an die Fahrgeschwindigkeit und das Fahrzeuggewicht sowohl im Straßen- und Geländegang angepaßt ist.

Die der Erfindung zugrunde liegende Aufgabe wird dadurch gelöst, daß das Bremsschaltventil mit den Gangschaltventilen über Leitungsabschnitte verbunden ist, daß in einer Schaltstellung des Bremsschaltventils ein Speicher mit Druckmittel befüllt wird und daß in einer weiteren Schaltstellung des Bremsschaltventils eine Verbindung vom Speicher zu einem Druckraum einer Bremse besteht. Die vorgeschlagene Lösung ist insbesondere deswegen vorteilhaft, weil der Speicher in normalem Fahrbetrieb (Bremsschaltventil geöffnet) ständig mit Druckmittel befüllt wird. Im Bremsbetrieb gibt er das Druckmittelvolumen in eine Druckmittelleitung ab, die in den Druckraum der Kupplung bzw. Bremse mündet. Auf diese Weise wirkt ein einstellbarer Restdruck immer auf die Bremse. Diese ist für dynamische Abbremsungen ausgelegt. Die Abbremsung erfolgt immer im höheren Gang und unzulässig hohe Verzögerungswerte, die eine mögliche Gefahrenquelle darstellen könnten, werden mit Sicherheit vermieden.

Das Bremsschaltventil ist den Gangschaltventilen in vorteilhafter Weise vorgeschaltet, so daß eine Anschlußleitung von der Speisepumpe zu einem Eingang des Bremsschaltventils führt. Der Speicher ist durch eine Leitung an den Leitungsabschnitt angeschlossen, der dem Bremsschaltventil folgt.

Eine vorteilhafte Ausgestaltung der Antriebseinrichtung besteht darin, daß das Bremsschaltventil über einen Leitungsabschnitt an eine Druckmittelleitung angeschlossen ist, die einerseits mit einem Bremsventil und andererseits mit dem Druckraum der Bremse (bzw. Kupplung) verbunden ist. Im Bremsbetrieb kann das Bremsventil den eingestellten Druck so lange halten, wie der Speicher Druckmittel nachspeist. Der Speicher speist in die Druckmittelleitung, so daß ein eingestellter Restdruck immer auf die Bremse wirkt.

Für eine rationelle Fertigung ist es vorteilhaft, wenn die Gangschaltventile, das Bremsschaltventil und das Bremsventil in einem gemeinsamen Ventilblock zusammengefaßt sind. In Verbindung mit der Schaltung der Gänge ist es vorteilhaft, wenn die von den Gangschaltventilen wegführenden Druckmittelleitungen über Rückschlagventile mit parallel geschalteten Drosseln an die Druckräume der Kupplung und der Bremse angeschlossen sind. Durch die Rückschlagventile mit den parallel geschalteten Drosseln kann mit relativ einfachen Mitteln eine wirksame Druckmodulation herbeigeführt werden. Auf diese Weise kann das Übergangsverhalten der Kupplung bzw. Bremse vom geschlossenen in den geöffneten Zustand und umgekehrt angepaßt werden.

Eine baulich einfache Lösung erhält man, wenn die Gangschaltventile als 3/2-Wegeventile ausgebildet sind, die über Signalflußleitungen mit einem elektronischen Getriebesteuergerät verbunden sind. Sämtliche Ventile können baugleich ausgebildet werden.

Das Bremsschaltventil und die Gangschaltventile sind in stromlosem Zustand in einer Schaltstellung, die den Druckmitteldurchfluß speisepumpenseitig sperrt. Auf diese Weise ist, neben dem normalen Bremsbetrieb, auch eine Notbremsung bei Stromausfall möglich.

Zur Überwachung des Steuerdruckes ist es vorteilhaft, wenn ein Drucksensor den in den Druckmittelleitungen herrschenden Druck erfaßt. Sollte dieser Druck nicht ausreichend sein, um die Kupplung bzw. die Bremse zu lüften, kann ein Fahrbetrieb durch das elektronische Steuergerät unterbunden werden. Wenn bei nicht wirksamer Bremse die zur Kupplung bzw. Bremse führenden Druckmittelleitungen drucklos sind, kann das Getriebesteuergerät in der Weise reagieren, daß ein Gangschaltventil betätigt wird.

Anstelle eines Drucksensors ist wahlweise die Verwendung eines Druckschalters möglich.

Zur Betätigung der Parkbremse ist ein Schalter über eine Steuersignalleitung an das Getriebesteuergerät angeschlossen. Der Schalter liefert ein Signal, um die Gangschaltventile stromlos zu schalten, während eine Parkbremsleuchte aktiviert wird.

Es zeigen:
- Fig. 1: ein Getriebeschema mit einem lastschaltbaren, als Planetengetriebe ausgebildeten Zwei-Gang-Getriebe als Teil einer Antriebseinrichtung;
- Fig. 2: das Schema einer hydraulischen Getriebesteuerung einer Antriebseinrichtung mit den für die Gangschaltung und das Bremsen wesentlichen Bauteilen;
- Fig. 3: weitere Einzelheiten der Antriebseinrichtung nach den Fig. 1 und 2.

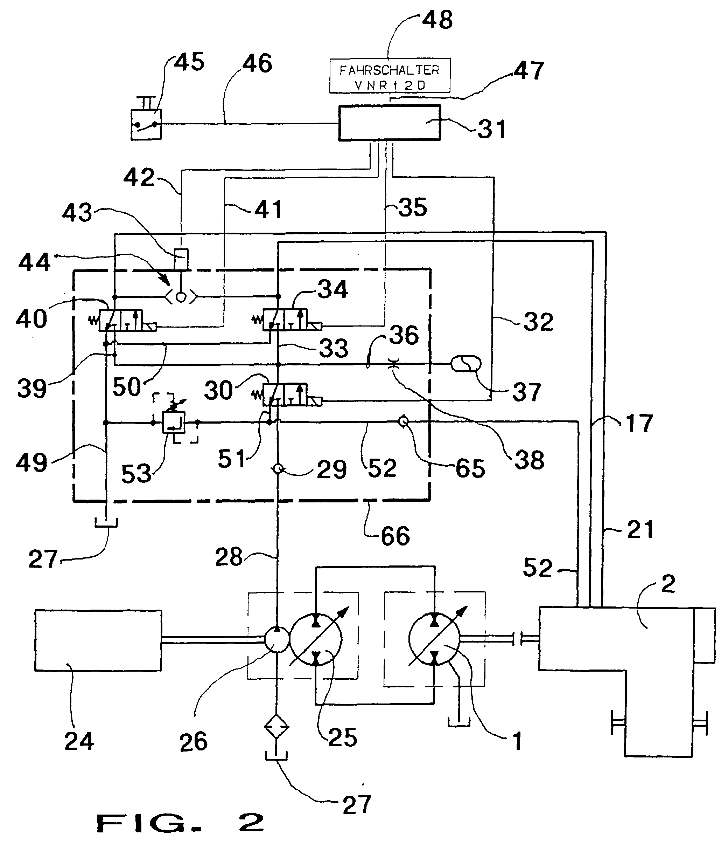

In Fig. 1 ist schematisch ein Teil einer Antriebseinrichtung wiedergegeben, mit einem Antriebsaggregat für ein lastschaltbares Zwei-Gang-Getriebe. Letzteres ist bevorzugt als Planetengetriebe 2 ausgebildet, während das Antriebsaggregat vorzugsweise ein hydraulischer Verstellmotor 1 ist. Das lastschaltbare Getriebe kann auch mehr als zwei Gänge aufweisen.

Der Verstellmotor 1 kann in beiden Drehrichtungen mit stufenloser Drehzahl- und Drehmomentwandlung aus der Anfangsdrehzahl Null heraus arbeiten. Der Verstellmotor treibt eine Antriebswelle 3 des Planetengetriebes 2 an.

Das Planetengetriebe 2 setzt sich im einzelnen aus einem inneren Zentralrad 4, einem äußeren Zentralrad 5, mehreren Planetenrädern 6 und einem Planetenträger 7 zusammen. Der Planetenträger 7 ist auf einer Abtriebswelle 8 gelagert und kann über eine Schaltstelle 9 mit dieser drehfest verbunden werden. Die Abtriebswelle 8 trägt ein Zahnrad 10, das mit einem weiteren Zahnrad 11 einer Ausgangswelle 12 in kämmender Antriebsverbindung steht. Über die Ausgangswelle 12 erfolgt der Antrieb der Räder, zum Beispiel eines Radladers.

Die beiden Gangstufen des lastschaltbaren Planetengetriebes 2 sind über eine Kupplung 13 und eine Bremse 14 hydraulisch schaltbar. Ein gemeinsamer Lamellenträger 15 der Kupplung 13 und Bremse 14 ist mit dem äußeren Zentralrad 5 als einstückiges Bauteil gefertigt.

Zum Schalten des ersten Ganges wird die innen liegende Kupplung 13 dadurch geöffnet, daß einem Druckraum 16 über eine angedeutete Druckmittelleitung 17 Druckmittel zugeführt wird. Ein Kolben 18 wird dann gegen die Kraft von Federn, bevorzugt Tellerfedern 19, nach links verschoben. Die außen liegende Bremse 14 ist geschlossen.

Zum Schalten des zweiten Ganges wird die Kupplung 13 geschlossen, während, bevorzugt nach einer Überschneidungsschaltung mit Druckmodulation, die Bremse 14 geöffnet wird. Hierzu wird einem Druckraum 20 über eine Druckmittelleitung 21 Druckmittel zugeleitet. Ein Kolben 22 wird gegen die Kraft von Tellerfedern 23 nach links - bezogen auf die Zeichnung - verschoben.

In Fig. 2 sind die für den Antrieb und die Betätigung des lastschaltbaren Planetengetriebes 2 erforderlichen Funktionsgruppen insgesamt abgebildet. Unter der Betätigung des Planetengetriebes wird hierbei das Zusammenwirken der Kupplung 13 und Bremse 14 verstanden, um die Gänge zu schalten und im Fahrbetrieb die Bremse zu betätigen.

Ein Antriebsmotor, insbesondere ein Dieselmotor 24, treibt eine hydrostatische Verstellpumpe 25. Diese bildet, zusammen mit dem Verstellmotor 1, ein hydrostatisches Getriebe, dessen Übersetzungsverhältnis durch eine automotive Antriebsregelung elektronisch geregelt wird.

Das für die elektro-hydraulische Getriebesteuerung erforderliche Druckmittel wird von einer Speisepumpe aus einem Tank 27 über eine Anschlußleitung 28, in die ein Rückschlagventil 29 eingeschaltet ist, einem Eingang eines Bremsschaltventils 30 zugeführt. Das Bremsschaltventil 30 ist ein elektro-magnetisch schaltbares 3/2-Wegeventil, das von einem elektronischen Getriebesteuergerät 31 über eine Steuersignalleitung 32 angesteuert wird. In der gezeigten Schaltposition ist das Bremsschaltventil 30 abgeschaltet (stromlos). Ein Leitungsabschnitt 33 führt vom Bremsschaltventil 30 zu einem Gangschaltventil 34. Dieses Gangschaltventil ist ebenfalls als 3/2-Wegeventil ausgebildet und über eine Steuersignalleitung 35 durch das elektronische Getriebesteuergerät 31 ansteuerbar.

Das Gangschaltventil 34 ist in der gezeichneten Schaltposition stromlos (Durchfluß gesperrt).

Vom Leitungsabschnitt 33 zweigt eine Leitung 36 ab. Diese führt zu einem hydropneumatischen Speicher 37. In der Leitung 36 liegt eine Blende 38.

Ein weiterer Leitungsabschnitt 39 zweigt vom Leitungsabschnitt 33 ab und führt zu einem Eingang eines weiteren Gangschaltventils 40. Dieses Gangschaltventil ist baugleich zum Gangschaltventil 34 und ist über eine Steuersignalleitung 41 mit dem Getriebesteuergerät 31 verbunden.

Mit dem Gangschaltventil 34 wird die Kupplung 13 des Planetengetriebes 2 geschaltet. Die hierzu vorgesehene Druckmittelleitung 17 führt vom Gangschaltventil 34 zum Planetengetriebe 2 (Fig. 1, Druckraum 16).

Mit dem Gangschaltventil 40 wird die Bremse 14 betätigt. Die hierzu vorgesehene Druckmittelleitung 21 führt vom Gangschaltventil 40 zum Planetengetriebe 2 (Fig. 1, Druckraum 20).

Über eine Steuersignalleitung 42 ist ein Drucksensor 43 über ein Wechselventil 44 an die Druckmittelleitungen 17 und 21 angeschlossen. Der in diesen Druckmittelleitungen herrschende Druck wird durch den Drucksensor 43 laufend überwacht. Ist dieser Druck nicht ausreichend, um die Kupplung 13 und die Bremse 14 zu lüften, unterbindet das Getriebesteuergerät einen Fahrbetrieb. Sofern die Bremse 14 nicht geschlossen ist, die Druckmittelleitungen 17 und 21 aber drucklos sind, kann das Getriebesteuergerät in der Weise reagieren, daß zum Beispiel eines der Gangschaltventile 34 oder 40 betätigt wird. Mit diesem Eingriff wird ein Blockieren der Antriebsräder des Fahrzeugs verhindert. Anstelle eines Drucksensors, mit dem unterschiedliche Druckbereiche erkannt werden können, ist die Verwendung eines Druckschalters möglich. Anstelle der Kombination Drucksensor 34/Wechselventil 44 ist die Verwendung von drei Drucksensoren möglich.

Eine Rücklaufleitung 49 verbindet das Gangschaltventil 40 mit dem Tank 27. In die Rücklaufleitung 49 mündet eine Rücklaufleitung 50 des Gangschaltventils 34. Der Rücklauf des Druckmittels über das Bremsschaltventil 30 erfolgt über einen Leitungsabschnitt 51, der in eine weitere Druckmittelleitung 52 mündet. Die Druckmittelleitung 52 ist einerseits an einem Bremsventil 53 angeschlossen. Andererseits führt sie zum Planetengetriebe 2 und ist in einem Leitungsknoten 54 mit der Druckmittelleitung 21 verbunden. Der Leitungsknoten 54 stellt sicher, daß der im Druckraum 20 der Bremse 14 herrschende Druck sowohl vom Druck des Druckmittels in der Druckmittelleitung 21 als auch vom Druck des Druckmittels in der Druckmittelleitung 52 abhängig ist.

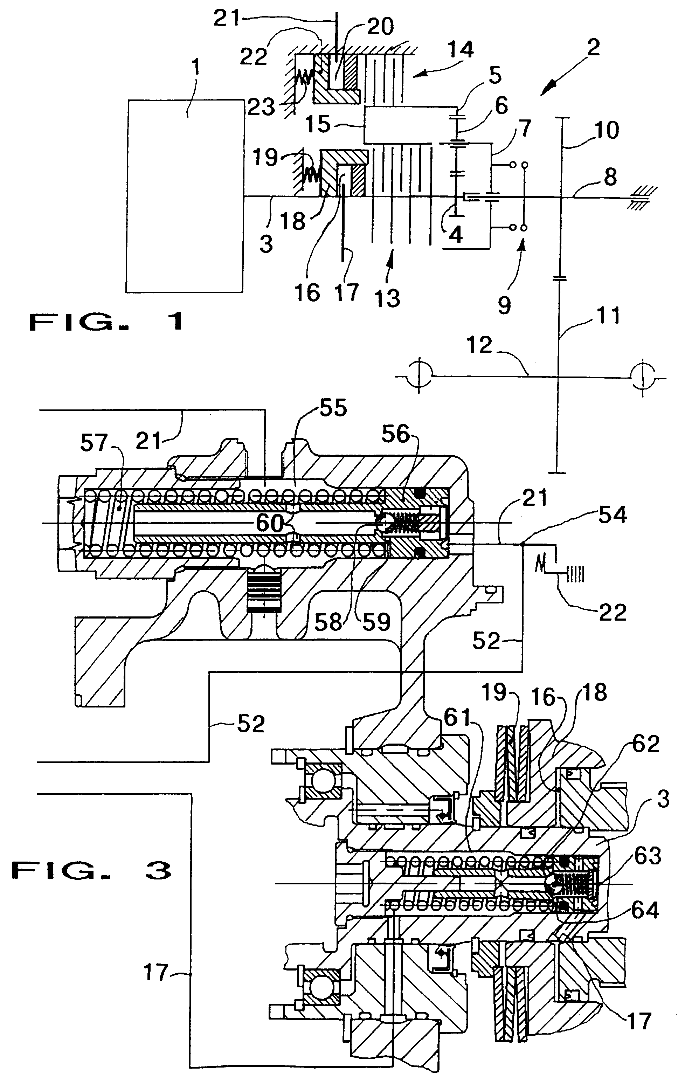

Der zweite Gang des Planetengetriebes 2 wird wie folgt geschaltet:
Das rechte Feld des Gangschaltventils 40 wird geschaltet. Das von der Speisepumpe 26 geförderte Druckmittel gelangt über das geöffnete Bremsschaltventil 30 und die Druckmittelleitung 21 in einen Zylinderraum 55 (Fig. 3). Im Zylinderraum 55 ist ein Kolben 56 unter Einwirkung der Kraft einer Schraubendruckfeder 57 axial verschieblich gelagert. Das Druckmittel gelangt über ein federbelastetes Rückschlagventil 58 und die Fortsetzung der Druckmittelleitung 21 in den Druckraum 20 der Bremse 14. Der Kolben 22 wird nach links verschoben. Die Bremse 14 öffnet sich.

Bei einer Rückschaltung vom zweiten in den ersten Gang wechselt das Gangschaltventil 40 seine Stellung und nimmt die in Fig. 1 eingezeichnete Schaltposition ein. Die Druckmittelleitung 21 ist über die Rücklaufleitung 49 mit dem Tank 27 verbunden. Durch den Wechsel der Schaltposition des Gangschaltventils 40 wird der Kolben 56 durch das aus dem Druckraum 20 entweichende Druckmittel - bei geschlossenem Rückschlagventil 58 - nach links gegen die Kraft der Schraubendruckfeder 57 verschoben. Um zu verhindern, daß die Bremse 14 schlagartig das volle Drehmoment überträgt, wenn das Lüftspiel der Reibelemente auf den Wert von Null reduziert wird, fließt das nunmehr rechts vom Kolben 56 im Zylinderraum 55 eingeschlossene Druckmittel über eine Drossel 59 und radial verlaufende Bohrungen 60 im Kolben 56 über die Druckmittelleitung 21 zum Tank ab. Der zeitliche Ablauf kann zudem durch die Kennlinie der Schraubendruckfeder 57 und die Auslegung der Drossel 59 beeinflußt werden. Durch den stetigen Abbau des vor dem Kolben 56 herrschenden Druckes wird die Bremse 14 mit einem stetigen Übergang letztlich durch die Tellerfedern 23 vollständig geschlossen.

In der Druckmittelleitung 17 liegt, in die Antriebswelle 3 integriert, ein Zylinderraum 61 mit einem federbelasteten Kolben 62, einem federbelasteten Rückschlagventil 63 mit einer parallel geschalteten Drossel 64. Der Vorgang zum Befüllen bzw. Entleeren des Druckraumes 16 der Kupplung 13 erfolgt auf die im Zusammenhang mit dem Druckraum 20 erläuterte Art und Weise. Zum Öffnen der Kupplung 13 ist das rechte Feld des Gangschaltventils 34 geschaltet. Bei sich schließender bzw. geschlossener Kupplung ist die Druckmittelleitung 17 über die Leitung 50 mit der Rücklaufleitung 49 zum Tank 27 hin geöffnet (vgl. Fig. 2).

Da für die Kupplung 13 und die Bremse 14 separate Gangschaltventile 34 bzw. 40 vorgesehen sind, können unterschiedliche Überschneidungsschaltungen relativ einfach realisiert werden.

Der hydropneumatische Speicher 37 wird im Fahrbetrieb (das Bremsschaltventil 30 ist auf Durchfluß geschaltet) ständig mit Druckmittel befüllt.

Im Bremsbetrieb ist das Bremsschaltventil 30 stromlos, d. h. das linke Feld entsprechend Fig. 2 ist geschaltet. Der hydropneumatische Speicher 37 gibt das gespeicherte Druckmittelvolumen über die Blende 38 über die Leitung 51 an die Leitung 52 und ein geöffnetes Rückschlagventil 65 und die Druckmittelleitung 21 (Leitungsknoten 54) an den Druckraum 20 weiter.

Das Bremsventil 53 kann den eingestellten Druck so lange halten, wie der hydropneumatische Speicher 37 nachspeist. Hierbei gibt dieser Speicher mehr Druckmittel ab, als über die Drossel 59 und Leckagen abfließt. Über die Druckmittelleitung 52 wird der Druckraum 20 im Bremsbetrieb immer mit einem Restdruck beaufschlagt. Die Bremse 14 ist somit für dynamische Abbremsungen, zum Beispiel für eine Vollbremsung aus maximaler Geschwindigkeit, geeignet. Die Abbremsung erfolgt immer im zweiten Gang (Kupplung ohne Restdruck, Bremse mit Restdruck). Das hierfür notwendige Bremsmoment ist deutlich geringer als das von der Bremse 14 (bzw. Kupplung 13) übertragbare maximale Auslegungsmoment. Der dem Druckraum 20 im Bremsbetrieb aufgeschaltete Restdruck verhindert unzulässig hohe Verzögerungswerte bzw. ein Blockieren der Fahrzeugräder. Das Fahrzeug bleibt in jedem Fall für den Fahrer kontrollierbar. In vorteilhafter Weise ist der Restdruck in Abhängigkeit des Fahrzeuggewichtes einstellbar, so daß eine jeweils optimal abgestimmte Bremswirkung bei maximaler Fahrgeschwindigkeit im Straßen- und Geländegang erreicht wird.

Es ist vorteilhaft, die Ventile: Bremsschaltventil 30, Gangschaltventil 34, Gangschaltventil 40, Wechselventil 44 und das Bremsventil 53 in einem gemeinsamen Ventilblock 66 (in der Zeichnung mit einer dick gezeichneten, strichpunktierten Linie kenntlich gemacht) zusammenzufassen.

Ein Schalter 45 ist über eine Steuersignalleitung 46 an das Getriebesteuergerät 31 angeschlossen. Liefert der Schalter 45 ein Signal zum Betätigen der Parkbremse, werden das Bremsschaltventil 30 und die Gangschaltventile 34 und 40 stromlos geschaltet; gleichzeitig wird eine selbst nicht dargestellte Parkbremsleuchte aktiviert.

Das elektronische Getriebesteuergerät 31 steht über eine Leitung 47 mit einem Fahrschalter 48 in Verbindung.

Der Fahrschalter 48 kann die Schaltpositionen Vorwärts, Neutral und Rückwärts (V, N, R) einnehmen. Neben der Wählstellung für den ersten und den zweiten Gang kann der Fahrschalter in die Position D überführt werden, in der die beiden Gänge des Planetengetriebes automatisch geschaltet werden.

Das Bremsventil 53 kann, um ein dosiertes Abbremsen zu erreichen, durch ein Handbremsventil angesteuert werden.

### Bezugszeichen

- 1: Verstellmotor
- 2: Planetengetriebe
- 3: Antriebswelle
- 4: inneres Zentralrad
- 5: äußeres Zentralrad
- 6: Planetenrad
- 7: Planetenträger
- 8: Abtriebswelle
- 9: Schaltstelle
- 10: Zahnrad
- 11: Zahnrad
- 12: Ausgangswelle
- 13: Kupplung
- 14: Bremse
- 15: Lamellenträger
- 16: Druckraum
- 17: Druckmittelleitung
- 18: Kolben
- 19: Tellerfedern
- 20: Druckraum
- 21: Druckmittelleitung
- 22: Kolben
- 23: Tellerfedern
- 24: Dieselmotor
- 25: Verstellpumpe
- 26: Speisepumpe
- 27: Tank
- 28: Anschlußleitung
- 29: Rückschlagventil
- 30: Bremsschaltventil
- 31: Getriebesteuergerät
- 32: Steuersignalleitung
- 33: Leitungsabschnitt
- 34: Gangschaltventil
- 35: Steuersignalleitung
- 36: Leitung
- 37: Speicher
- 38: Blende
- 39: Leitungsabschnitt
- 40: Gangschaltventil
- 41: Steuersignalleitung
- 42: Steuersignalleitung
- 43: Drucksensor
- 44: Wechselventil
- 45: Schalter
- 46: Steuersignalleitung
- 47: Leitung
- 48: Fahrschalter
- 49: Rücklaufleitung
- 50: Rücklaufleitung
- 51: Leitungsabschnitt
- 52: Druckmittelleitung
- 53: Bremsventil
- 54: Leitungsknoten
- 55: Zylinderraum
- 56: Kolben
- 57: Schraubendruckfeder
- 58: Rückschlagventil
- 59: Drossel
- 60: Bohrung
- 61: Zylinderraum
- 62: Kolben
- 63: Rückschlagventil
- 64: Drossel
- 65: Rückschlagventil
- 66: Ventilblock

## Patentansprüche

1. Antriebseinrichtung für ein Kraftfahrzeug, insbesondere ein Baufahrzeug, wie Radlader, Bagger, Raupe, mit einem Antriebsaggregat (Dieselmotor 24), einem hydrostatischen Getriebe, bestehend aus einer Verstellpumpe (25), einem Verstellmotor (1), einer Speisepumpe (26) und einer elektro-hydraulischen Getriebesteuerung mit Gangschaltventilen (34, 40) zur Schaltung der Gänge und einem Bremsschaltventil (30) zur Betätigung einer Bremse eines lastschaltbaren Getriebes, insbesondere eines Planetengetriebes (2) mit zwei Gängen, dadurch **gekennzeichnet,** daß das Bremsschaltventil (30) mit den Gangschaltventilen (34, 40) über Leitungsabschnitte (33, 39) verbunden ist, daß in einer Schaltstellung des Bremsschaltventils (30) ein Speicher (37) mit Druckmittel befüllt wird und daß in einer weiteren Schaltstellung des Bremsschaltventils (30) eine Verbindung vom Speicher (37) zu einem Druckraum (20) einer Bremse (14) besteht.

2. Antriebseinrichtung nach Anspruch 1, dadurch **gekennzeichnet,** daß von einer Speisepumpe (26) eine Anschlußleitung (28) zu einem Eingang des Bremsschaltventils (30) führt und daß der Speicher (37) durch eine Leitung (36) an den Leitungsabschnitt (33 bzw. 39) angeschlossen ist.

3. Antriebseinrichtung nach Anspruch 2, dadurch **gekennzeichnet,** daß in der Leitung (36) eine Blende (38) angeordnet ist.

4. Antriebseinrichtung nach Anspruch 1, dadurch **gekennzeichnet,** daß das Bremsschaltventil (30) über einen Leitungsabschnitt (51) an eine Druckmittelleitung (52) angeschlossen ist, die einerseits mit einem Bremsventil (53) und andererseits mit dem Druckraum (20) verbunden ist.

5. Antriebseinrichtung nach Anspruch 1, dadurch **gekennzeichnet,** daß die Gangschaltventile (34, 40) und das Bremsventil (53) mit einer Rücklaufleitung (49) verbunden sind.

6. Antriebseinrichtung nach Anspruch 4, dadurch **gekennzeichnet,** daß das Bremsventil (53) von einem Handbremsventil ansteuerbar ist.

7. Antriebseinrichtung nach den Ansprüchen 1 und 4, dadurch **gekennzeichnet,** daß die Gangschaltventile (34, 40), das Bremsschaltventil (30) und das Bremsventil (53) in einem gemeinsamen Ventilblock (66) zusammengefaßt sind.

8. Antriebseinrichtung nach Anspruch 1, dadurch **gekennzeichnet,** daß die von den Gangschaltventilen (34, 40) wegführenden Druckmittelleitungen (17, 21) über Rückschlagventile (58, 63) mit parallel geschalteten Drosseln (59, 64) an die Druckräume (16, 20) der Kupplung (13) und Bremse (14) angeschlossen sind.

9. Antriebseinrichtung nach Anspruch 1, dadurch **gekennzeichnet,** daß das Bremsschaltventil (30) und die Gangschaltventile (34, 40) als elektro-magnetisch betätigbare 3/2-Wegeventile ausgebildet sind, die über Signalflußleitungen (32, 35, 41) mit einem elektronischen Getriebesteuergerät verbunden sind.

10. Antriebseinrichtung nach Anspruch 9, dadurch **gekennzeichnet,** daß das Bremsschaltventil (30) und die Gangschaltventile (34, 40) in stromlosem Zustand den Druckmitteldurchfluß sperren.

11. Antriebseinrichtung nach Anspruch 8, dadurch **gekennzeichnet,** daß ein Drucksensor (43) den in den Druckmittelleitungen (17, 21) herrschenden Druck überwacht.

12. Antriebseinrichtung nach Anspruch 10, dadurch **gekennzeichnet,** daß bei einem Druck in den Druckmittelleitungen (17, 21), der nicht ausreichend ist, um die Kupplung (13) und die Bremse (14) zu lüften, das Getriebesteuergerät (31) einen Fahrbetrieb unterbindet.

13. Antriebseinrichtung nach Anspruch 1, dadurch **gekennzeichnet,** daß über eine Steuersignalleitung (46) ein Schalter (45) an das Getriebesteuergerät (31) angeschlossen ist und der zum Betätigen der Parkbremse ein Signal liefert, um die Gangschaltventile (34, 40) stromlos zu schalten, während eine Parkbremsleuchte aktiviert wird.

## Claims

1. Drive system for a motor vehicle, more particularly for a construction machine, such as a wheel loader, excavator, tracked vehicle, with a drive unit (diesel motor 24), a hydrostatic transmission, comprising a variable displacement pump (25), a servomotor (1), a feed pump (26) and an electro-hydraulic transmission control with gear shift valves (34, 40) for shifting the gears and a brake switch valve (30) for actuating a brake of a power shift transmission, more particularly of a planetary gearing (2) having two gears, characterised in that the brake switch valve (30) is connected to the gear shift valves (34, 40) via line sections (33, 39), a reservoir (37) is filled with pressure medium in one switching position of the brake switch valve (30), and in a further switching position of the brake switch valve (30) a connection is formed between the reservoir (37) and a pressure chamber (20) of a brake (14).

2. Drive system according to claim 1, characterised in that a connection line (28) leads from a feed pump (26) to an input of the brake switch valve (30) and the reservoir (37) is connected by a line (36) to the line section (33 or 39).

3. Drive system according to claim 2, characterised in that a restrictor (38) is arranged in the line (36).

4. Drive system according to claim 1, characterised in that the brake switch valve (30) is connected via a line section (51) to a pressure medium line (52), which is connected on the one hand to a brake valve (53) and cn the other hand to the pressure chamber (20).

5. Drive system according to claim 1, characterised in that the gear shift valves (34, 40) and the brake valve (53) are connected to a return line (49).

6. Drive system according to claim 4, characterised in that the brake valve (53) can be actuated by a manual brake valve.

7. Drive system according to claims 1 and 4,
characterised in that the gear shift valves (34, 40), the brake switch valve (30) and the brake valve (53) are combined in a common valve block (66).

8. Drive system according to claim 1, characterised in that the pressure medium lines (17, 21) leading from the gear shift valves (34, 40) are connected via non-return valves (58, 63) with throttles (59, 64) connected in parallel to the pressure chambers (16, 20) of the clutch (13) and brake (14).

9. Drive system according to claim 1, characterised in that the brake switch valve (30) and the gear shift valves (34, 40) are constructed as electromagnetically actuated 3/2-way valves, which are connected via signal flow lines (32, 35, 41) to an electronic transmission control device.

10. Drive system according to claim 9, characterised in that the brake switch valve (30) and the gear shift valves (34, 40) close in the flow-free state of the pressure medium flow.

11. Drive system according to claim 8, characterised in that a pressure sensor (43) monitors the pressure existing in the pressure medium lines (17, 21).

12. Drive system according to claim 10, characterised in that, in the event of a pressure in the pressure medium lines (17, 21) which is insufficient for the ventilation of the clutch (13) and the brake (14), the transmission control device (31) prevents driving operation.

13. Drive system according to claim 1, characterised in that a switch (45) is connected to the transmission control device (31) via a control signal line (46) and supplies a signal for actuating the parking brake in order to switch the gear shift valves (34, 40) to the flow-free state, whilst a parking brake light is actuated.

## Revendications

1. Ensemble d'entraînement pour un véhicule automobile, notamment pour un engin de chantier tel qu'un chargeur à roues, une pelle mécanique, une chenillette, comportant un équipement moteur (moteur Diesel 24), une transmission hydrostatique composée d'une pompe de réglage variable (25), un servo-moteur (1), une pompe d'alimentation (26) et une commande électrohydraulique avec soupapes de commande du changement de vitesse (34, 40) pour changer la vitesse et une soupape de commande de frein (30) pour actionner un frein d'un engrenage embrayable en charge, notamment un engrenage planétaire (2) à deux vitesses, **caractérisé** en ce que la soupape de commande de frein (30) est reliée par l'intermédiaire de sections de conduite (33, 39) aux soupapes de commande des vitesses (34, 40), que dans une position de commande de la soupape de commande de frein (30), un réservoir (37) est rempli avec du fluide sous pression et que dans une autre position de commande de la soupape de commande de frein (30), il existe une liaison entre le réservoir (37) et une chambre sous pression (20) d'un frein (14).

2. Ensemble d'entraînement selon la revendication 1, **caractérisé** en ce qu'une conduite de raccordement (28) mène d'une pompe d'alimentation (26) vers une entrée de la soupape de commande de frein (30), et en ce que le réservoir (37) est raccordé par une conduite (36) à la section de conduite (33, respectivement 39).

3. Ensemble d'entraînement selon la revendication 2, **caractérisé** en ce qu'un obturateur (38) est disposé dans la conduite (36).

4. Ensemble d'entraînement selon la revendication 1, **caractérisé** en ce que la soupape de commande de frein (30) est raccordée par l'intermédiaire d'une section de conduite (51) à une conduite de fluide sous pression (52) qui est reliée d'une part à une soupape de frein (53) et d'autre part avec une chambre sous pression (20).

5. Ensemble d'entraînement selon la revendication 1, **caractérisé** en ce que les soupapes de commande du changement de vitesse (34, 40) et la soupape de frein (53) sont reliés à une conduite de retour (49).

6. Ensemble d'entraînement selon la revendication 4, **caractérisé** en ce que la soupape de frein (53) peut être commandée par une soupape de frein à main.

7. Ensemble d'entraînement selon les revendications 1 et 4, **caractérisé** en ce que les soupapes de commande du changement de vitesse (34, 40), la soupape de commande de frein (30) et la soupape du frein (53) sont regroupées dans un bloc à soupapes (66) commun.

8. Ensemble d'entraînement selon la revendication 1, **caractérisé** en ce que les conduites du fluide sous pression (17, 21) partant des soupapes de commande du changement de vitesse (34, 40) sont raccordées par l'intermédiaire de clapets anti-retour (58, 63) à étranglements (59, 64) montés en parallèle aux chambres sous pression (16, 20) de l'embrayage (13) et du frein (14).

9. Ensemble d'entraînement selon la revendication 1, **caractérisé** en ce que la soupape de commande de frein (30) et les soupapes de commande du changement de vitesse (34, 40) sont réalisées sous forme de vannes à 3/2 voies à commande électromagnétique qui sont reliées par l'intermédiaire de conduites d'acheminement de signaux (32, 35, 41) à un appareil de commande électronique.

10. Ensemble d'entraînement selon la revendication 9, **caractérisé** en ce que la soupape de commande de frein (30) et les soupapes de commande du changement de vitesse (34, 40) bloquent dans l'état sans courant le passage du fluide sous pression.

11. Ensemble d'entraînement selon la revendication 8, **caractérisé** en ce qu'un détecteur de pression (43) contrôle la pression régnant dans les conduites du fluide sous pression (17, 21).

12. Ensemble d'entraînement selon la revendication 10, **caractérisé** en ce qu'avec une pression insuffisante dans les conduites du fluide sous pression (17, 21) pour desserrer l'embrayage (13) et le frein (14), l'appareil de commande de la transmission (31) empêche le fonctionnement en roulement.

13. Ensemble d'entraînement selon la revendication 1, **caractérisé** en ce que, par l'intermédiaire d'une conduite des signaux de commande (46), un commutateur (45) est raccordé à l'appareil de commande de la transmission (31) qui, pour actionner le frein de stationnement, fournit un signal pour mettre hors circuit les soupapes de commande du changement de vitesse (34, 40), tandis qu'un feu du frein de stationnement est activé.
